(19)

**Europäisches Patentamt**

**European Patent Office**

**Office européen des brevets**

(11) **EP 4 614 933 A1**

(12) **EUROPEAN PATENT APPLICATION**

(43) Date of publication:
**10.09.2025 Bulletin 2025/37**

(21) Application number: **24212842.9**

(22) Date of filing: **14.11.2024**

(51) International Patent Classification (IPC):
*H04L 45/12* (2022.01)　　*H04L 45/125* (2022.01)
*H04L 45/00* (2022.01)　　*H04L 45/48* (2022.01)
*H04L 45/484* (2022.01)

(52) Cooperative Patent Classification (CPC):
**H04L 45/124; H04L 45/125; H04L 45/22;
H04L 45/48; H04L 45/484**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.03.2024 US 202418598150**

(71) Applicant: **Google LLC
Mountain View, CA 94043 (US)**

(72) Inventors:
- **TOWLES, Brian Patrick
  Mountain View, California 94043 (US)**
- **PARTA, Hojat
  Mountain View, California 94043 (US)**
- **CHIPLUNKAR, Kaustubh Gopal
  Mountain View, California 94043 (US)**

(74) Representative: **Betten & Resch
Patent- und Rechtsanwälte PartGmbB
Maximiliansplatz 14
80333 München (DE)**

(54) **FAULT TOLERANCE IN NETWORK TOPOLOGIES WITH RANDOMIZATION AND WILD ROUTING**

(57)　　Aspects of the disclosure are directed to a randomly determined first hop for network routing in an N-dimensional grid network. The first hop for a packet traversing the network is randomly determined based on a probability distribution for potential first hops. Based on a destination for the packet, a router in the network can search for potential paths and corresponding probabilities for the first hop, select a path based on the first hop, and forward the packet along that path to its destination. Network routing with a randomly determined first hop can improve fault tolerance without adding network complexities to the N-dimensional grid network.

100

Select a first hop for a route randomly from a source node to a current node according to a probability distribution — 110

Select a subsequent hop across a link from the current node to an additional node in the route — 120

Determine whether the route includes a broken link — 130

Abandon route — 140　　Y

N

Assign the additional node as the current node — 150

Determine whether the current node is the destination node — 160　　N

Y

Accept the route — 170

FIG. 1

## Description

BACKGROUND

An N-dimensional grid network is a network where each node of the network is connected with N neighboring nodes along N number of dimensions, where N can be any number of dimensions. Example N-dimensional grid networks can include mesh, torus, or twisted torus networks. N-dimensional grid networks may contain sparse link failures, resulting in node-to-node reachability between any two nodes not being guaranteed when using deterministic dimension-order routing techniques. Moreover, these dimension-order routing techniques may not address high load imbalance and/or traffic congestion at links near where the fault occurs.

BRIEF SUMMARY

Aspects of the disclosure are directed to a randomly determined first hop for network routing in an N-dimensional grid network. The first hop for a packet traversing the network is randomly determined based on a probability distribution for potential first hops. Based on a destination for the packet, a router in the network can search for potential paths and corresponding probabilities for the first hop, select a path based on the first hop, and forward the packet along that path to its destination. Network routing with a randomly determined first hop can improve fault tolerance without adding network complexities to the N-dimensional grid network.

An aspect of the disclosure provides for a method for routing a packet in an N-dimensional grid network including: receiving, by one or more processors, the packet for transmission to a destination, the packet comprising data indicating the destination; determining, by the one or more processors, a list of potential paths the packet can traverse to reach the destination based on the data indicating the destination, the list of the potential paths including a list of potential first hops and respective probabilities for selecting each of the potential first hops; selecting, by the one or more processors, a first hop based on the probabilities for each of the potential first hops; and transmitting, by the one or more processors, the packet to the selected first hop.

Another aspect of the disclosure provides for a system including: one or more processors; and one or more storage devices coupled to the one or more processors and storing instructions that, when executed by the one or more processors, cause the one or more processors to perform operations for the method for routing a packet in an N-dimensional grid network.

Yet another aspect of the disclosure provides for a non-transitory computer readable medium for storing instructions that, when executed by one or more processors, cause the one or more processors to perform operations for the method for routing a packet in an N-dimensional grid network.

In an example, the packet traverses the network to the destination based on the selected first hop. In another example, the grid network includes at least one of a mesh, torus, or twisted torus network. In yet another example, the list of potential paths the packet can traverse to reach the destination is stored in a routing table.

In yet another example, the probabilities are cumulative probabilities. In yet another example, selecting the first hop based on the cumulative probabilities further includes: generating a random number; and selecting the first hop of the potential first hops whose cumulative probability corresponds to the random number. In yet another example, the cumulative probability corresponds to the random number when the random number is less than or equal to the cumulative probability. In yet another example, generating the random number further includes extracting a modulus of the random number; and selecting the first hop based on the cumulative probabilities further includes selecting the first hop of the potential first hops whose cumulative probability corresponds to the modulus of the random number. In yet another example, generating the random number further includes generating a random string of bits representing the random number.

In yet another example, the method further includes generating, by the one or more processors, the probabilities based on routing that reduces load on each dimension of the grid network. In yet another example, the routing minimizes a maximum load on each dimension of the grid network.

BRIEF DESCRIPTION OF THE DRAWINGS

FIG. 1 depicts a flow diagram of an example wild-first hop routing technique with randomization according to aspects of the disclosure.

FIG. 2 depicts a diagram of a grid network with an example set of candidate routes selected based on the wild-first hop routing technique with randomization according to aspects of the disclosure.

FIG. 3 depicts a block diagram of an example set of compute units connected via queues according to aspects of the disclosure.

FIG. 4 depicts a block diagram of an example router implementing wild-first routing with randomization according to aspects of the disclosure.

FIG. 5 depicts a block diagram of an example router randomizer according to aspects of the disclosure.

FIG. 6 depicts a block diagram of an example cluster of compute units according to aspects of the disclosure.

FIG. 7 depicts a block diagram of an example of connectivity between circuit switches and compute subnet units according to aspects of the disclosure.

FIG. 8 depicts a block diagram of an example connectivity breakdown in a toroidal cluster when a circuit switch fails according to aspects of the disclosure.

DETAILED DESCRIPTION

The technology relates generally to wild-first network routing with randomization, where at least the first hop that a packet traverses in the network is randomly determined based on a probability distribution. Wild-first may refer to arbitrarily selecting a hop from a plurality of potential hops for the packet to reach its destination. The network routing can improve fault tolerance by, for example, achieving over 90% of fault-free bandwidth in a nearest neighbor communication, without adding any network resources like virtual channels or other network complexities.

The network can be an N-dimensional network, such as a mesh, torus, or twisted torus network. A network can include multiple nodes, which can be, for example, computing nodes that process incoming data and generate corresponding output data, or a network node for routing traffic to other nodes of the network. A packet of data can traverse the network from a source to a destination, possibly also passing through one or more intermediate nodes between the source and the destination. A packet can be said to hop from node to node, as it is transmitted from a source to an intermediate node and then eventually to the destination. The first hop of a packet can refer to the transmission of a packet from a source node to an intermediate node. Wild-first routing with randomization occurs in the first hop while wild-first routing without randomization can occur for any other hops in the path the packet takes to reach the destination.

The packet traverses the network to reach its destination via one or more network nodes, such as routers, based on paths stored in routing tables. The routing tables can be distributed across the routers and/or placed at packet sources, as examples. The routing tables store information that determines the sequence of routers the packet travels from its source to its destination. The routing tables can include a list of potential first hops for the packet along with probabilities for selecting one of the potential first hops. The probabilities can be weights stored as cumulative probabilities in the routing tables. The probabilities in the routing table can be determined by executing a routing algorithm that reduces load on each dimension of the network. For example, the routing algorithm can minimize the maximum load on each dimension of the network.

The packet can be encapsulated with a header indicating the destination for the packet. Based on the header, the router can look up potential paths and corresponding probabilities for the first hop in the routing table, select a path based on the first hop, and forward the packet along that path to its destination.

The router utilizes a route randomizer for determining the first hop in selecting a path for the packet to reach its destination. The route randomizer can include a random number generator or pseudorandom number generator. For example, the random number generator can include a linear feedback shift register (LFSR) unit, a modulo unit, and a prefetch unit. The LFSR unit can generate a random string of bits representing a random number. The modulo unit can ensure the random number being generated is within the probability distribution of the potential first hops. The prefetch unit can store the random number in a first in first out (FIFO) order for quick receipt when determining the first hop. The router can select the first hop of the potential first hops for the packet based on the generated random number by selecting the first hop whose cumulative probability corresponds to the generated random number. For example, the router can select the first hop whose cumulative probability is less than or equal to the generated random number. In some examples, the route randomizer generates and uses a pseudorandom number that approximates a random number using an algorithm and a seed value.

As an example, a packet in a 3-dimensional grid network can traverse 6 potential first hops. The 6 potential first hops can have the following probability distribution to minimize the maximum load on each dimension of the network: hop 0 - 1/12, hop 1 - 1/6, hop 2 - 1/4, hop 3 - 1/12, hop 4 - 1/12, and hop 5 - 1/3. Given the probability distribution, the cumulative probabilities of the potential first hops are as follows: hop 0 - [1], hop 1 - [2,3], hop 2 - [4,6], hop 3 - [7], hop 4 - [8], and hop 5 - [9,12]. The probabilities here have been scaled to be represented as integers. To save space, the routing table may only store the upper end of the cumulative probabilities, e.g., hop 0-1, hop 1-3, hop 2-6, hop 3 - 7, hop 4-8, and hop 5 - 12. The random number generator can generate a number from 1 to 12. The router can select the first hop whose cumulative probability corresponds to the generated random number, such as being less than or equal to the generated random number. For instance, if the random number generator generates 4, the route randomizer selects hop 2 as the first hop, or if the random number generator generates 8, the route randomizer selects hop 4 as the first hop.

Based on the wild-first routing, the selected first hop can determine the remaining path the packet will traverse to reach the destination. As the packet traverses the network, subsequent hops may or may not include randomization.

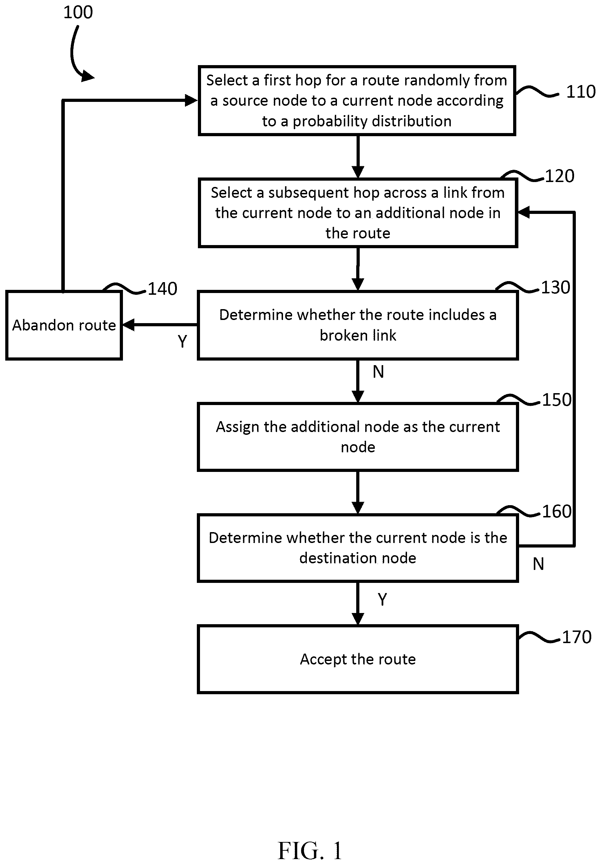

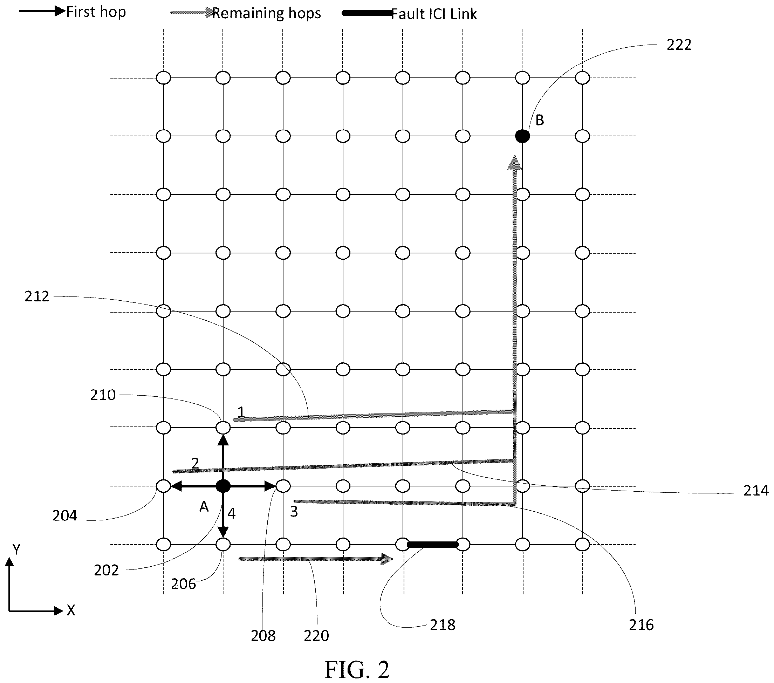

FIG. 1 depicts a flow diagram of an example wild-first hop routing technique with randomization of at least the first hop 100. The technique 100 can be implemented by one or more routers in an N-dimensional grid network, such as a mesh, torus, or twisted torus network. FIG. 2 depicts a diagram of an example 2-dimensional grid network to illustrate the routing technique from a source node 202 to a destination node 222.

As shown in block 110, the routers can randomly select a first hop from a source node to the next node for sending a packet of data according to a probability distribution. For example, as depicted in FIG. 2, the routers may randomly select the first hop from a source node 202 by sending the packet in one of four directions to the next node, such as one of nodes 204, 206, 208, and 210. Each node can have a corresponding probability of being selected. The source node 202 can send a packet to either node 204 in the -x direction, node 206 in the -y direction, node 208 in the x direction, or node 210 in the y direction. For an N-dimensional grid network, the router may randomly select a first hop in one of 2N directions. Alternatively, or additionally, the router may randomly select a first hop in one of N, $N^2$, or $2^N$ directions. For example, for a 3-dimensional grid network, the router can randomly select the first hop in one of 6 directions or, for a 2-dimensional grid network as depicted in FIG. 2, the router can randomly select the first hop in one of 4 directions. Once the packet reaches the next node after selecting the first hop, the routers can designate that next node as the current node.

As shown in block 120, the routers may select a subsequent hop across a link from the current node to an additional node in the route based on the randomly selected first hop. A link can refer to a physical cable or wire connecting two nodes together. In some examples, the link is part of a physical board or package interconnect, e.g., an PCIe interconnection, connecting two nodes to the same board or package. In some examples, the link may be a wireless connection.

The routers may select a subsequent hop according to a dimension order that minimizes the path to the destination node. For example, if the dimension order is x-y-z, then the packet can traverse to the next node along the x-direction first. For example, as depicted in FIG. 2, if the first hop was randomly selected to be node 208, then the packet is transmitted in the x direction. The next hop from node 208 can follow in the same x direction until no further moves in the x direction constitute a minimal path to the destination node 222 without changing to the y direction.

As shown in block 130, the routers can determine whether the hop from the current node to an additional node would encounter a broken or otherwise inactive link. A broken link may include any type of connectivity breakage on a link between two nodes. If the hop from the current node to an additional node encounters a broken or otherwise inactive link, then the routers can abandon the router, as shown in block 140. The routers can then randomly select another hop for the packet, which can be based on a probability distribution for selecting the next node. For example, as depicted in FIG. 2, if node 206 was selected, the packet may encounter a broken link 218 along the route 220. Therefore, another node may be randomly selected instead, such as node 204 in the -x direction, node 208 in the x direction, or node 210 in the y direction, for being the first hop.

If the hop from the current node to an additional node does not encounter a broken or otherwise inactive link, the packet may continue to traverse to the next node.

As shown in block 150, the routers can assign the additional node as the current node. For example, as depicted in FIG. 2, if node 208 was selected, the routers can assign node 208 as the current node for the route 216 to the destination node 222.

As shown in block 160, the routers can determine whether the current node is the destination node. If the current node is not the destination node, then the next hop may be selected by sending the packet to the next node in the same direction. Blocks 120-160 can be repeated until the packet reaches the destination node without encountering a broken or otherwise inactive link. For example, as depicted in FIG. 2, if node 208 was selected, the routers can repeat selecting subsequent hops to additional nodes along route 216 until the destination node 222 reached.

If the current node is the destination node, then the packet reaches the destination node. As shown in block 170, the routers accept the route traversed by the packet as a valid route. A valid route may refer to a route from a source node to a destination node without any broken or otherwise inactive links along the dimension order.

As described earlier, FIG. 2 depicts a diagram of an example set of candidate routes that can be selected based on wild-first routing with randomization. Node 202 can be a source node and node 222 can be a destination node. At node 202, a candidate route can be established by randomly selecting a first hop according to a probability distribution for selecting hop 204 in the -x direction, hop 206 in the -y direction, hop 208 in the x direction, or hop 210 in the y direction. The selected route can follow an x-y dimension order. For example, if a packet from source node 202 reaches node 208, the subsequent hops follow the same x direction until the route 216 cannot minimize the path in the x direction to reach the destination node 222. Then, the subsequent hops follow the same y direction. As another example, if the packet reaches node 210, the subsequent hops follow the x direction until the route 212 cannot minimize the path in the x direction to reach the destination node 222. Then, the subsequent hops follow the same y direction. As yet another example, if the packet reaches node 204, the subsequent hops may traverse back to the source node to node 208 in the x direction until the route 214 cannot minimize the path in the x direction to reach the destination node 222. Then, the subsequent hops follow the same y direction. However, if the packet reaches node 206, then route 220 may encounter a broken link 218 along the x direction. If the broken link is encountered, route 220 may be removed as a selection choice.

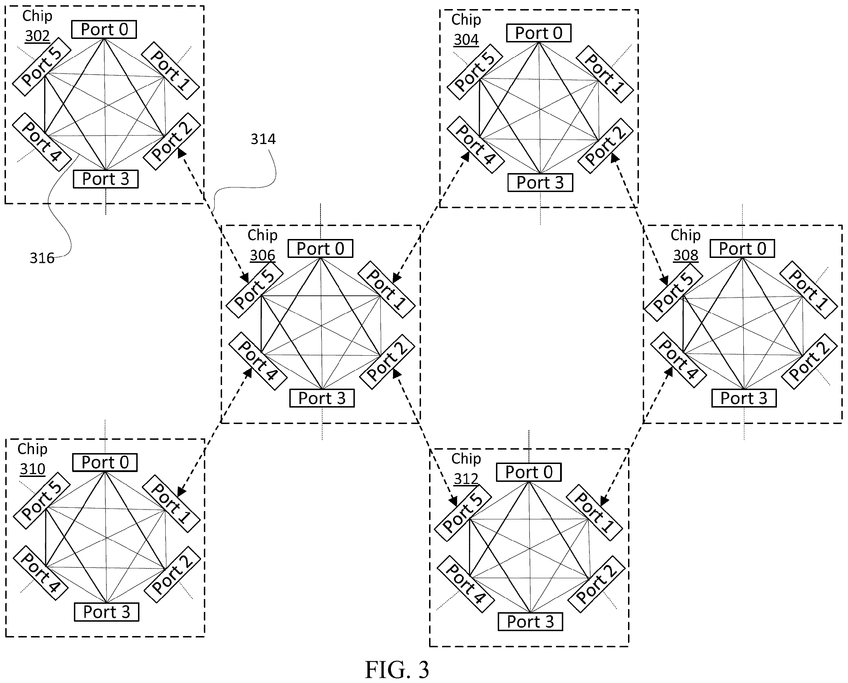

FIG. 3 depicts a block diagram of an example set of compute units connected via port-to-port queues. As depicted, each compute unit, or chip, 302, 304, 306, 308, 310, 312, includes 6 ports for communication, though the compute units can include any number of ports. Each port can include any number of port-to-port queues set up at the output side of the port. For example, queues 316 in chip 302 include 5 queues, as depicted in FIG. 3. There can further be any number of output queues sourcing from each compute unit and any number of input queues sinking at each compute unit. As depicted in FIG. 3, there can be 6 output queues and 6 input queues for each compute unit. For example, queue 314 may act as an egress queue if data is coming toward port 5 of chip 306 and/or queue 314 may act as an ingress queue if port 5 of chip 306 sends data to port 2 of chip 302.

One or more routers may be located on the same or different die with the compute units 302, 304, 306, 308, 310, 312. The routers may contain the queues, such as the egress queues, ingress queues, and/or port-to-port queues, and a content-addressable memory that stores routing rules. The content-addressable memory may store a routing table for defining how packets are routed between source and destination node pairs. The port-to-port queues may buffer data coming in from an input port to an output port and may serve as the relay of an intermediate hop to send data to a destination. The port-to-port queues may be set at the input port or the output port. The decision of which queue data may be buffered to go to the output may be determined by consulting the content-addressable memory. The wild-first routing technique with randomization may leverage these queue structures to eliminate deadlock cycles when traversing packets in the network.

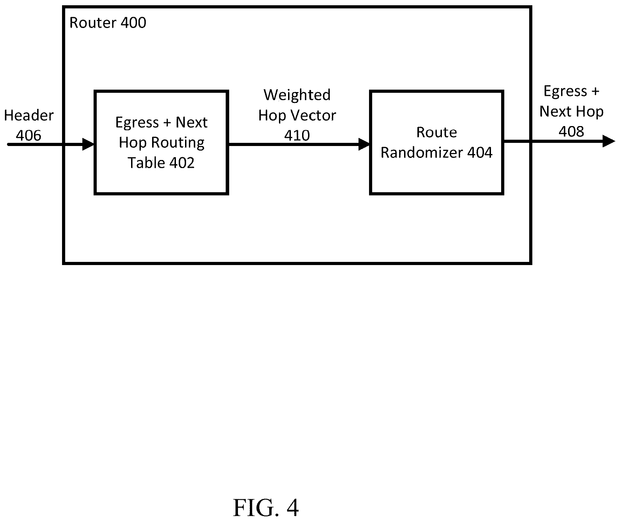

FIG. 4 depicts a block diagram of an example router 400 implementing wild-first routing with randomization. The router 400 can include a routing table 402 and a route randomizer 404 for traversing packets through the network. While depicted within router 400 in FIG. 4, routing tables can be distributed across routers and/or placed at source nodes in the network, as examples. The routing table 402 can be configured to store information for determining the sequence of nodes in the network a packet travels from its source to reach its destination. The routing table 402 can include a list of potential first hops for the packet, e.g., egress hops, along with probabilities for selecting one of the potential first hops. Below is an example routing table for a 2-dimensional grid network, such as the network depicted in FIG. 2.

Table 1

| Probability | Egress Hop | Next Hop |
|---|---|---|
| 50% | X | X |
| 30% | Y | X |
| 5% | -Y | X |
| 15% | -X | X |

As shown in Table 1, a first egress hop in the X direction to node 208 has a 50% chance of being selected, a second egress hop in the Y direction to node 210 has a 30% chance of being selected, a third egress hop in the -Y direction to node 206 has a 5% chance of being selected, and a fourth egress hop in the -X direction to node 204 has a 15% chance of being selected. The third egress hop may have a lower probability of being selected due to the broken link 218 in its path. The table can further include subsequent hops for the egress hop that is selected and the direction in the network the packet will traverse to reach its destination, which can be based on a dimension order, e.g., x-y dimension order.

The probabilities can be stored as cumulative probabilities in the routing tables. Below is the example routing table for the 2-dimensional grid network depicted in FIG. 2 with cumulative probabilities.

Table 2

| Probability | Egress Hop | Next Hop |
|---|---|---|
| 50% | X | X |
| 80% | Y | X |
| 85% | -Y | X |
| 100% | -X | X |

As shown in Table 2, a first egress hop in the X direction has a 50% chance of being selected, a second egress hop in the Y direction has a 30% chance of being selected but is stored as 80%, a third egress hop in the -Y direction has a 5% chance of being selected but is stored as 85%, and a fourth egress hop in the -X direction has a 15% chance of being selected but is stored as 100%. While depicted as percentages in the tables, the probabilities can be stored as fractions, integers, or any other value indicative of a probability. Further, to save space, the routing table 402 may only store the upper end of the cumulative probabilities, e.g., 10/20, 16/20, 17/20, and 20/20 rather than 1/20-10/20, 11/20-16/20, 17/20, and 18/20-20/20 for the above table.

The probabilities in the routing table 402 can be determined by routing techniques that reduce load on each dimension of the network. For example, the routing techniques can minimize the maximum load on each dimension of the network. A given source-destination pair in the network can have R paths, where the probability of a path is a multiple of 1/F. An integer value $x_p$ can be generated for each path $p$ between each source-destination pair. The integer variables can be constrained as $0 \leq x_p \leq F, \forall p \in P$ and $\Sigma_{p \in P_{s,d}} x_p = F, \forall s, d$, where $P$ is the set of all paths and $P_{s,d}$ is the subset of those paths between the source $s$ and the destination $d$. Here, $\frac{x_p}{F}$ is the probability that a path $p$ is taken. The number of paths with non-zero probability is constrained by introducing Boolean variables $t_p$ for each path where $x_p \leq Ft_p, \forall p \in P$ and $\Sigma_{p \in P_{s,d}} t_p \leq R, \forall s, d$. The load on each channel $\gamma_c$ is computed by summing the variables $x_p$ whose path contains the channel c. For example, $\gamma_c = \Sigma_{p \in c} x_p$. The probabilities can be formulated to minimize the maximum load across all channels. For example, *minimize L, s. t.* $\gamma_c$

$\leq L_{dim(c)}, \forall c$ and $L_d \leq L, \forall d$, where $L_d$ is the maximum load on dimension $d$ and $dim(c)$ is the network dimension associated with channel $c$. The probabilities in the routing table 402 can be periodically updated and/or updated in response to encountering an unexpected broken or otherwise unavailable link by re-executing the routing techniques to reduce load on each dimension of the network.

A packet traversing the network can include a header 406 indicating the destination for the packet. The router 400 can use the header 406 to look up potential first egress hops and corresponding probabilities for the potential first egress hops in the routing table 402. The first egress hop can indicate the path that the packet will traverse in the network to its destination. The router 400 can utilize the router randomizer 404 to select a first hop from the potential first egress hops based on the corresponding probabilities and forward the packet to the selected hop 408. The corresponding probabilities can be received by the route randomizer as a weighted hop vector 410.

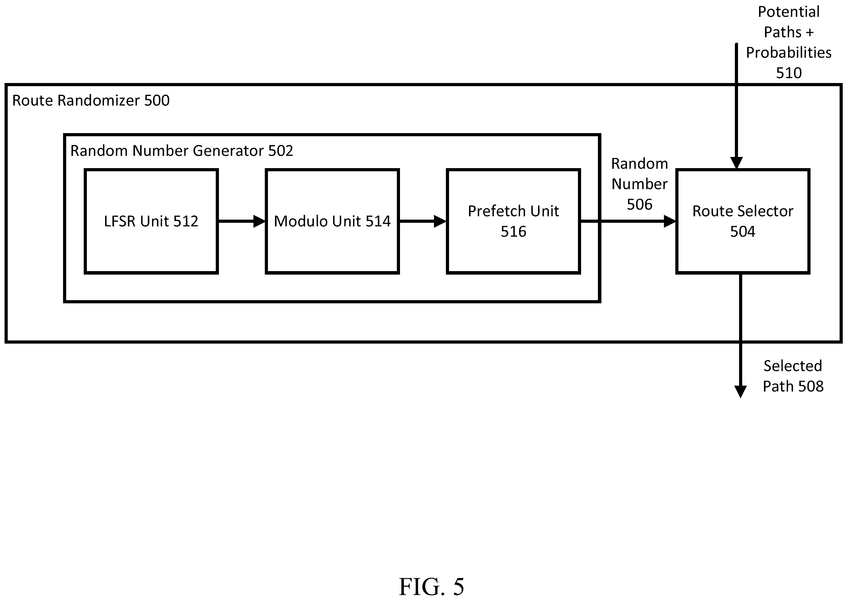

FIG. 5 depicts a block diagram of an example router randomizer 500 in a router that implemented wild-first routing with randomization. The router randomizer 500 can correspond to the route randomizer 404 as depicted in FIG. 4. The route randomizer 500 can include a random number generator 502 and a route selector 504. The random number generator 502 is configured to generate a random number 506 and the route selector 504 is configured to select a first hop indicative of a selected path 508 from a plurality of potential paths 510 based on the generated random number 506.

The route randomizer 500 can include any random number generator 502. For example, the random number generator 502 can include a linear feedback shift register (LFSR) unit 512, a modulo unit 514, and a prefetch unit 516. The LFSR unit 512 can be configured to generate a random string of bits representing a random number.

The modulo unit 514 can be configured to validate that the random number is within the probability distribution of the potential first hops or modify the random number so that it is within the probability distribution. The modulo unit 514 can modify the random number by using a remainder of the random number when divided by the denominator of the probability distribution. For example, if the probability distribution is 1/2, 3/10, 1/20, and 3/20, the random number must be a number from 1 to 20. Therefore, if the LFSR unit 512 generates a random number of 16, the modulo unit 514 can validate that number. However, if the LFSR unit 512 generates a random number of 27, the modulo unit 514 can modify that number to 7.

The prefetch unit 516 can be configured to store the random number in a first in first out order for the route selector 504 to be able to quickly receive the random number for determining the first hop. The router selector 504 can be configured to select the first hop of the potential paths 510 for the packet based on the generated random number 506 by selecting the first hop whose cumulative probability corresponds to the generated random number 506. For example, the route selector 504 can select the first hop whose cumulative probability is less than or equal to the generated random number. As another example, the route selector 504 can select the first hop whose cumulative probability is greater than or equal to the generated random number.

Referring back to the probability distribution depicted in Table 2 for the 2-dimensional grid network depicted in FIG. 2, the random number generator 502 can generate a number from 1 to 20. If the random number generator 502 generates a number greater than 20, the module unit 514 can modify the number so that it is less than or equal to 20. The route selector 504 can select the first hop whose cumulative probability corresponds to the generated number, such as the first hop whose cumulative probability is less than or equal to the generated number. For example, if the random number generator 502 generates 8, the route selector 504 selects the first egress hop in the X direction to node 208. As another example, if the random number generator 502 generates 13, the route selector 504 selects the second egress hop in the Y direction to node 210.

The selected first hop from the route selector 504 can determine the remaining path for the packet, such as by following a minimal path to the destination according to a dimension order. As the packet reaches additional nodes, those nodes may or may not include randomization for determining the next hop.

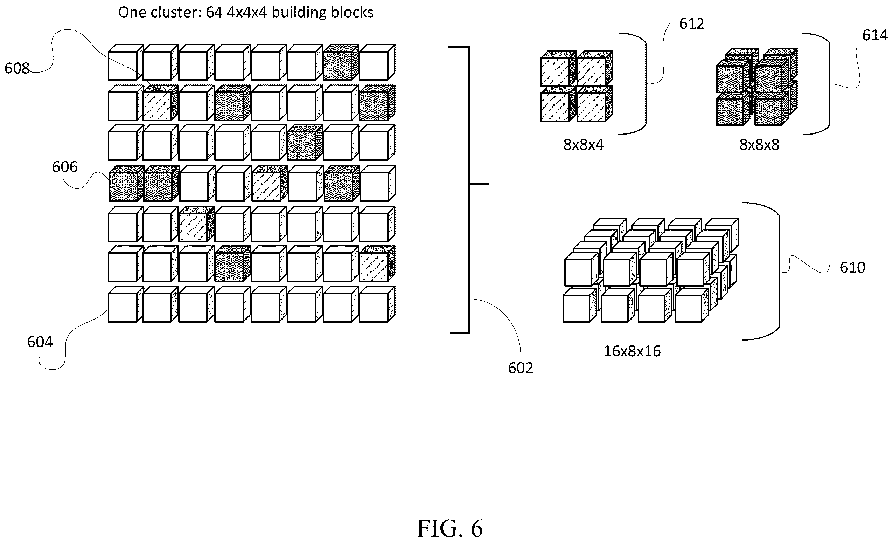

FIG. 6 depicts a block diagram of an example cluster of compute units. The cluster can be a distributed cluster within a network fabric. The network fabric may be scalable based on the cluster being built upon homogenous building block subnets, such as 4x4x4 fix-wired cubes. Each building block may produce external-facing wires that can be paired. The network fabric can be a CPU-side network or an accelerator-side network, as examples. The cluster can include circuit switches of any technology, such as optical circuit switches.

The cluster 602 can include 64 build blocks. Each building block can include 64 compute units arranged in 4x4x4 cubical shapes. The cubes may be centrally cross connected by a set of circuit switches (not shown). The circuit switches may select various sets of building blocks. For example, different jobs may be selected using each building block, such as building blocks 604, 606, and 608. Building block 608 may be rearranged into a larger unit of jobs, such as unit 612. As other examples, building block 606 may be rearranged into an 8x8x8 building block 614 and building block 604 may be grouped into a larger 16x8x16 building block 610. One or more faults may occur at spots on the building blocks, which can result in symmetrical faults in the larger building blocks. The wild-first routing with randomization as described above can alleviate these faults to improve fault tolerance and load balancing.

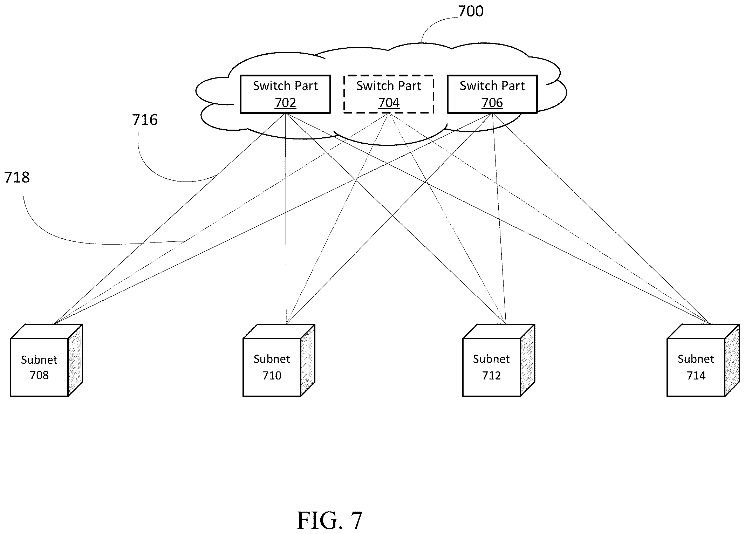

FIG. 7 depicts a block diagram of an example of connectivity between circuit switches and compute subnet units. Hardware faults can occur for the compute units within a subnet building block and/or at the centralized circuit switches that may interconnect different subnets. Network 700 includes circuit switch 702, circuit switch 704, and circuit switch 706. Here, each subnet 708, 710, 712, and 714 is connected to the circuit switches in an "all-to-all" fashion. For example, subnet 708 may be connected to circuit switches 702, 704, and 706. When a fault occurs at circuit switch 704, although subnet 708 may lose a link 718, subnet 708 may still maintain connectivity with subnets 710, 712, and 714. Thus, if the circuit switch set has a sufficient number of switches to ensure all the subnet building blocks in a cluster are connected to each other, the network can provide a fault pattern that may be consistently observed throughout each subnet or building block of a cluster.

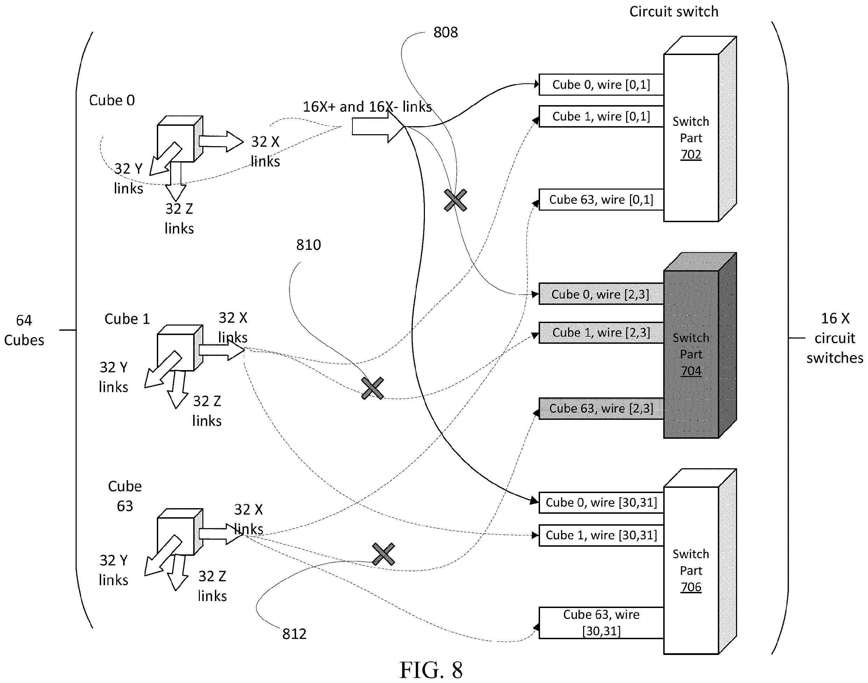

FIG. 8 depicts a block diagram of an example connectivity breakdown in a toroidal cluster when a circuit switch fails. FIG. 8 depicts the same switch fault as illustrated in FIG. 7. If circuit switch 704 breaks down, the broken switch may have a large impact on the entire cluster network. The impacted radius may be large when the number of circuit switches scales with the size of the network. In this example, each subnet building block may process 32 wires along x/y/z dimensions. Each circuit switch may have the capacity for 128 wires. When a switch fails, since all the subnet blocks may be connected to circuit switch 704, a broken wire may affect at least some position within each subnet building block. For example, link 808 may be affected by part 704. Link 810 and 812 may also be affected. In this example, each cube may have the same fault pattern since each cube 0, cube 1 and cube 2 are connected to circuit switch 704 from the nodes located at the same position within the cube. In this example, they are connected by the nodes in the position [2,3].

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed thereon software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" or "data processing system" refers to data processing hardware and encompasses various apparatus, devices, and machines for processing data, including programmable processors, computers, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

**Claims**

1. A method for routing a packet in an N-dimensional grid network comprising:

    receiving, by one or more processors, the packet for transmission to a destination, the packet comprising data indicating the destination;
    determining, by the one or more processors, a list of potential paths the packet can traverse to reach the destination based on the data indicating the destination, the list of the potential paths comprising a list of potential first hops and respective probabilities for selecting each of the potential first hops;
    selecting, by the one or more processors, a first hop based on the probabilities for each of the potential first hops; and
    transmitting, by the one or more processors, the packet to the selected first hop.

2. The method of claim 1, wherein the packet traverses the network to the destination based on the selected first hop, and/or wherein the grid network comprises at least one of a mesh, torus, or twisted torus network, and/or wherein the list of potential paths the packet can traverse to reach the destination is stored in a routing table.

3. The method of any one of claims 1 or 2, wherein the probabilities are cumulative probabilities.

4. The method of claim 3, wherein selecting the first hop based on the cumulative probabilities further comprises:

generating a random number; and
selecting the first hop of the potential first hops whose cumulative probability corresponds to the random number.

5. The method of claim 4, wherein the cumulative probability corresponds to the random number when the random number is less than or equal to the cumulative probability.

6. The method of any one of claims 4 or 5, wherein:

generating the random number further comprises extracting a modulus of the random number; and
selecting the first hop based on the cumulative probabilities further comprises selecting the first hop of the potential first hops whose cumulative probability corresponds to the modulus of the random number.

7. The method of any one of claims 3 to 6, wherein generating the random number further comprises generating a random string of bits representing the random number.

8. The method of any one of the preceding claims, further comprising generating, by the one or more processors, the probabilities based on routing that reduces load on each dimension of the grid network, and wherein the routing optionally minimizes a maximum load on each dimension of the grid network.

9. A system comprising:

one or more processors; and
one or more storage devices coupled to the one or more processors and storing instructions that, when executed by the one or more processors, cause the one or more processors to perform operations for routing a packet in an N-dimensional grid network, the operations comprising:

receiving the packet for transmission to a destination, the packet comprising data indicating the destination;
determining a list of potential paths the packet can traverse to reach the destination based on the data indicating the header, the list of the potential paths comprising a list of potential first hops and respective probabilities for selecting each of the potential first hops;
selecting a first hop based on the probabilities for each of the potential first hops; and

transmitting the packet to the selected first hop.

10. The system of claim 9, wherein the packet traverses the network to the destination based on the selected first hop, and/or
wherein the list of potential paths the packet can traverse to reach the destination is stored in a routing table.

11. The system of any one of claims 9 or 10, wherein the probabilities are cumulative probabilities.

12. The system of claim 11, wherein selecting the first hop based on the cumulative probabilities further comprises:

generating a random number; and
selecting the first hop of the potential first hops whose cumulative probability corresponds to the random number.

13. The system of claim 12, wherein the cumulative probability corresponds to the random number when the random number is less than or equal to the cumulative probability, and/or wherein:

generating the random number further comprises extracting a modulus of the random number; and
selecting the first hop based on the cumulative probabilities further comprises selecting the first hop of the potential first hops whose cumulative probability corresponds to the modulus of the random number.

14. The system of any one of claims 9 to 13, wherein the operations further comprise generating the probabilities based on routing that reduces load on each dimension of the grid network.

15. A non-transitory computer readable medium for storing instructions that, when executed by one or more processors, cause the one or more processors to perform operations for routing a packet in an N-dimensional grid network, the operations comprising:

receiving the packet for transmission to a destination, the packet comprising data indicating the destination;
determining a list of potential paths the packet can traverse to reach the destination based on the data indicating the destination, the list of the potential paths comprising a list of potential first hops and respective probabilities for selecting each of the potential first hops;
selecting a first hop based on the probabilities for each of the potential first hops; and
transmitting the packet to the selected first hop.

100

Select a first hop for a route randomly from a source node to a current node according to a probability distribution ⌇ 110

Select a subsequent hop across a link from the current node to an additional node in the route ⌇ 120

140

Abandon route ◄— Y — Determine whether the route includes a broken link ⌇ 130

N

Assign the additional node as the current node ⌇ 150

Determine whether the current node is the destination node ⌇ 160

N

Y

Accept the route ⌇ 170

FIG. 1

FIG. 2

FIG. 3

EP 4 614 933 A1

Router 400

Header 406 → Egress + Next Hop Routing Table 402 → Weighted Hop Vector 410 → Route Randomizer 404 → Egress + Next Hop 408

FIG. 4

Route Randomizer 500

Random Number Generator 502

| LFSR Unit 512 | → | Modulo Unit 514 | → | Prefetch Unit 516 |

Potential Paths + Probabilities 510

Random Number 506

Route Selector 504

Selected Path 508

FIG. 5

One cluster: 64 4x4x4 building blocks

8x8x4 612

8x8x8 614

16x8x16 610

608

606

604

602

FIG. 6

EP 4 614 933 A1

15

FIG. 7

FIG. 8

Circuit switch

Cube 0

32 Y links
32 X links
32 Z links

16X+ and 16X- links

808

810

Cube 1

32 X links
32 Y links
32 Z links

Cube 63

32 X links
32 Y links
32 Z links

812

64 Cubes

Cube 0, wire [0,1]
Cube 1, wire [0,1]
Cube 63, wire [0,1]

Switch Part 702

Cube 0, wire [2,3]
Cube 1, wire [2,3]
Cube 63, wire [2,3]

Switch Part 704

Cube 0, wire [30,31]
Cube 1, wire [30,31]
Cube 63, wire [30,31]

Switch Part 706

16 X circuit switches

EP 4 614 933 A1

17

Europäisches Patentamt
European Patent Office
Office européen des brevets

## EUROPEAN SEARCH REPORT

**Application Number**

EP 24 21 2842

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARJUN SINGH ET AL: "Locality-preserving randomized oblivious routing on torus networks", PARALLEL ALGORITHMS AND ARCHITECTURES, ACM, 2 PENN PLAZA, SUITE 701 NEW YORK NY 10121-0701 USA, 10 August 2002 (2002-08-10), pages 9-13, XP058179735, DOI: 10.1145/564870.564873 ISBN: 978-1-58113-529-9 * Section 3. Randomized Local Balance Routing - RLB and RLBTH; page 10 - page 13 * | 1-15 | INV. H04L45/12 H04L45/125 H04L45/00 H04L45/48 H04L45/484 |
| A | US 2023/094933 A1 (TOWLES BRIAN PATRICK [US]) 30 March 2023 (2023-03-30) * paragraph [0111] - paragraph [0118]; figures 6,7,8 * | 1-15 | |
| A | FLAVELL A ET AL: "TOKKYU: A HIGH-PERFORMANCE, RANDOMIZING, ADAPTIVE MESSAGE ROUTER WITH PACKET EXPRESSWAY", IEICE TRANSACTIONS ON INFORMATION AND SYSTEMS, INFORMATION & SYSTEMS SOCIETY, TOKYO, JP, vol. E78-D, no. 10, 1 October 1995 (1995-10-01), pages 1248-1260, XP000541670, ISSN: 0916-8532 * the whole document * | 1-15 | **TECHNICAL FIELDS SEARCHED (IPC)** H04L |
| A | CN 1 787 478 A (ELECTRONIC SCI & TECH UNIV [CN]) 14 June 2006 (2006-06-14) * the whole document * | 1-15 | |

The present search report has been drawn up for all claims

| Place of search | Date of completion of the search | Examiner |
|---|---|---|
| The Hague | 10 April 2025 | Beker, Sergio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 2842

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2025

| Patent document cited in search report | Publication date | Patent family member(s) | Publication date |
|---|---|---|---|
| US 2023094933 A1 | 30-03-2023 | EP 4006736 A1<br>US 2022173973 A1<br>US 2023094933 A1 | 01-06-2022<br>02-06-2022<br>30-03-2023 |
| CN 1787478 A | 14-06-2006 | NONE | |

For more details about this annex : see Official Journal of the European Patent Office, No. 12/82